# EUROPEAN PATENT APPLICATION

(11) **EP 2 295 825 A2**
(43) Date of publication of application: **16.03.2011**
(21) Application number: 09793970.6
(22) Date of filing: 29.06.2009
(51) Int. Cl.: F16D 67/04, B30B 15/10

(54) **COMBINED BRAKE AND CLUTCH DEVICE FOR PRESSES**

(30) Priority: 08.07.2008 ES 200802032
(71) Applicant: GOIZPER, S. COOP., 20577 Antzuola Gipuzkoa (ES)
(72) Inventor: ARANA DOMINGUEZ, Amagoia, E-20577 Antzuola (Guipuzcoa) (ES)
(74) Representative: Durán Moya, Carlos
(86) International application number: PCT/ES2009/000342
(87) International publication number: WO 2010/004062

(57) **Abstract**

The invention relates to a brake and clutch device comprising two sets of pistons, that can be moved independently by the action of two independent sets of hydraulic fluid lines that can respectively act on the set of clutch plates and the set of brake plates, said device comprising a set of fixed springs that urge the two mobile piston elements apart, enabling a third position to be reached in addition to the clutch and brake positions, the third position being a neutral gear position where the plates of the brake set and the plates of the clutch set are simultaneously released.

## Description

The present invention relates to a combined brake and clutch assembly for presses and other machines, providing substantial advantages over what is currently known.

In a conventional, mechanically actuated press the flywheel accumulates the necessary energy to accelerate in each cycle - lowering and raising the carriage - the components of the kinematic chain, which transform the input rotating motion reciprocally at the output but, above all, it provides the energy used to perform the work of the press: drawing, cutting, stamping, etc.

The energy that the flywheel transfers comes from the previously accumulated kinetic energy, depending on its inertia and the speed at which it is rotated by the electric motor which continually drives it, at the expense of reducing its speed. This loss of speed must be restored in each cycle by the motor, first after acceleration of the carriage and before performance of the work, and then after performance of the work to initiate a new cycle. The rotational speed of the flywheel is determined by the carriage speed required when the work piece is being produced.

One of the key components of the kinematic chain of a mechanical press is the clutch and brake assembly. The clutch enables the power of the flywheel to be transmitted to the rest of the kinematic chain and the brake enables the carriage to be stopped and positioned at the cycle start point, selectively separating the motor and flywheel assembly from the rest of the chain.

The clutches and brakes used for torque transmission in the majority of conventional mechanical presses are well known and widely used units, which incorporate both devices in a single assembly, and in which torque transmission is effected by friction. These units are more compact solutions than separate clutch and brake systems and are also intended to avoid overlap of brake and clutch operations, which may cause undesirable heating and dangerous motions. These combined units may be actuated by compressed air or by another fluid such as oil and are designed for high dissipation of the heat generated during operations, forced cooling being possible.

These units, which are known from the prior art, may only take two positions: the brake position when the kinematic chain of the press is halted and disconnected from the motor and flywheel assembly, or the clutch position when the flywheel is connected to the rest of the transmission chain causing the carriage to move.

This feature prevents the possibility of actuating the shaft of the press independently of the flywheel, which determines that the advance and return speed of the carriage of the press at said speed. This speed is usually defined by the advance speed of the carriage required during the work stroke to obtain correct shaping of the work piece, for example during drawing.

One of the most important features required of a press is to achieve high production, which necessitates the use of the highest acceptable work rate. This work rate is limited mainly by the heat dissipation limits of the combined brake and clutch unit, by the work speed depending on the material and part or by the waiting times required, for example for supply or while waiting for another process.

To optimise the last two causes which limit the work rate, new press architectures are being developed to produce maximum motion control. In one of them, the motor-flywheel-clutch drive is replaced by one or more servo motors which directly control the motion of the carriage and at the same time provide the necessary work power. These are known as servo presses (Komatsu, etc.). Said work power becomes high in presses above certain loads, which results in the electricity consumption not being viable in most installations. This problem led to consideration of the possibility of not eliminating the flywheel, so that work power continues to be provided by said flywheel but independent control of the speed of the carriage during its advance and return motions is also possible. To achieve this, the components for transmitting the motion to the carriage must be free and at the same time disconnected from the flywheel. Such presses equipped with a servo motor but retaining the flywheel belong to the so-called hybrid configuration described, each with its own features, in patents such as EP1640145 (Burkhardt Gmbh) and US2004003729 (Komatsu Artec Ltd.).

The components for transmission to the carriage are independent of the flywheel when the clutch is disconnected, but in conventional designs of combined brake and clutch units this position involves the brake being actuated, which makes it impossible to drive the shaft of the press.

To overcome the above-mentioned drawback of systems known from the prior art, provision has been made in the present invention for the production of a compact combined brake and clutch unit which provides clutch, brake and neutral (with the clutch and brake disengaged) positions, the design of which is intended in particular for mechanical presses which move the carriage to the lower neutral position with a servo motor (brake and clutch in the neutral position), whereas for stamping the flywheel is connected to the drive by means of the brake and clutch (in the clutch position), after which the drive is once again controlled by the servo motor disconnecting the flywheel (brake and clutch in the neutral position).

In other words, the present invention overcomes the above-mentioned drawback of the current art by incorporating a third neutral state in which both the clutch and the brake are disconnected, in such a way that the rest of the kinematic chain of the press is free and can act on said press, for example, with an independent motor, so that its speed may be altered at will. The new assembly is of very compact construction with a high heat dissipation capacity using a forced cooling system.

The neutral state is controlled independently, making it possible to operate in the conventional way, in which there is no neutral state, and in a novel way, in which the state where the brake is connected and the clutch disengaged switches to that where the brake is disconnected and the clutch engaged and vice versa, which also allows operation in the neutral state in which both the brake and the clutch are disconnected allowing the speed to be controlled.

As a mandatory safety function for presses and in case of possible emergencies, provision is also made in the present invention for the automatic and immediate actuation of the brake, which is applied using multiple compression springs which quickly halt the movable components of the press when the fluid pressure in the unit control circuit is eliminated, for example if the electricity supply fails.

An important advantage of the new invention is that its design is simple, with ease of assembly and lower manufacturing costs compared with the present systems, while preventing overlap between clutch and brake, particularly when a neutral state is sought with a press configuration in which the clutch and brake are independent.

The design of the combined brake and clutch assembly according to the invention is such that a two-position combined brake and clutch unit which may be fitted to a press of the known art in an easy retro-fitting operation, allowing it to be converted to incorporate the advantage of speed control as provided by the present invention.

The object of the present invention is achieved by the features of claim 1.

Other supplementary features of the invention are described in the dependent claims.

A combined brake and clutch device according to the present invention comprises a central body fixed axially and integral with the shaft, together with casings for the sets of clutch and brake plates connected to the clutch side and brake side of the machine, and having, between the body fixed to the shaft and said casings which are integral with the framework of the machine, two plunger components which, apart from the zones abutting the portions of the body fixed to the shaft, are able to act on the corresponding brake plates and clutch plates, one of them acting in the intermediate position between the set of brake plates and the set of clutch plates and the other, at an end of the unit, acting on the set of clutch plates. A set of springs acts between the two plunger components, causing them to move towards the ends of their respective travels in the stop position. The fluid is supplied by lines which act on one of the faces of each set of plungers to obtain the brake, neutral and clutch positions, which is the object of the present invention.

For a better understanding, the accompanying drawings show an explanatory but not limiting example of an embodiment of the combined brake and clutch device according to the present invention.
Fig. 1 shows a longitudinal cross-section of the brake and clutch device according to the present invention.
Fig. 2 shows a view in elevation from one end of the brake and clutch device of Fig. 1.
Fig. 3 shows a simplified cross-section of the brake and clutch device illustrated in Fig. 1 in the brake position.
Fig. 4 shows a simplified cross-section of the brake and clutch device illustrated in Fig. 1 in the neutral position.
Fig. 5 shows a simplified cross-section of the brake and clutch device illustrated in Fig. 1 in the clutch position.

As can be seen in the figures, the brake and clutch device according to the present invention comprises a central body 23, 24 and 13 fixed axially and integral with the shaft 1. The outer plates of the set of plates 11 on the brake side are integral with the casing 10 on the brake side, which is fixed to the frame of the machine, whereas the inner plates 12 of said set of brake plates are integral with the central body 13. The plates move axially. When the brake is actuated, the plates 11, 12 are trapped by the power of the springs 14 making the casing 10 on the brake side integral with the central body 23, 24, 13 and thus causing the shaft 1 to come to a halt.

The outer plates 21 of the set of clutch plates are integral with the casing on the clutch side 20 which is fixed to the flywheel of the press (in the case of press applications), whereas the inner plates 22 of said set of clutch plates are integral with the central body 24. The plates move axially. When the clutch is actuated, the plates 21, 22 are trapped making the casing on the clutch side 20 integral with the central body 23, 24, 13 and transmitting the motion and energy of the flywheel to the shaft of the machine 1.

The invention makes provision for two plunger bodies 31 and 32, both sliding on the portion 24 of the fixed central body, which plunger bodies are able to act on fixed stops 91 and 92 of said fixed body.

The actuation takes place by the application of hydraulic fluid through separate inlets 51 and 52 which, in addition to the clutch position and the brake position, allow a third neutral position to be obtained, as explained in more detail below.

Both plunger bodies 31 and 32 move axially by the action of the hydraulic fluid and return to their initial rest position by means of the set of springs 14.

In the rotating direction, the plunger bodies 31 and 32 are integral with the central body.

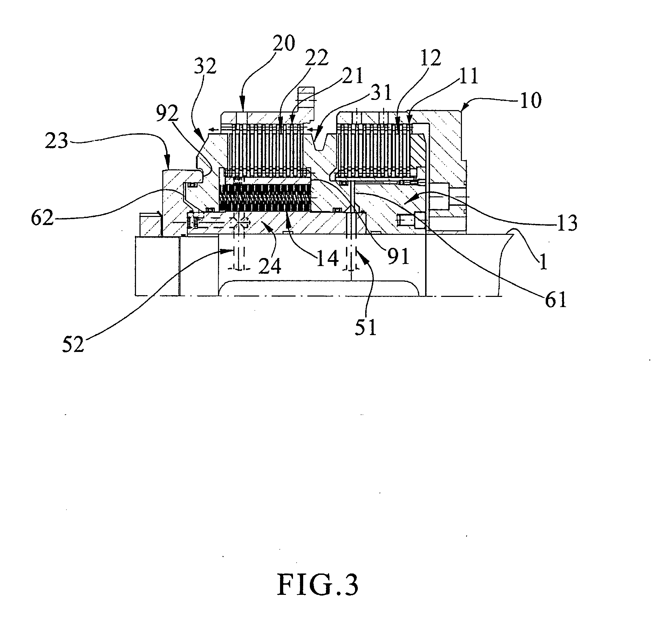

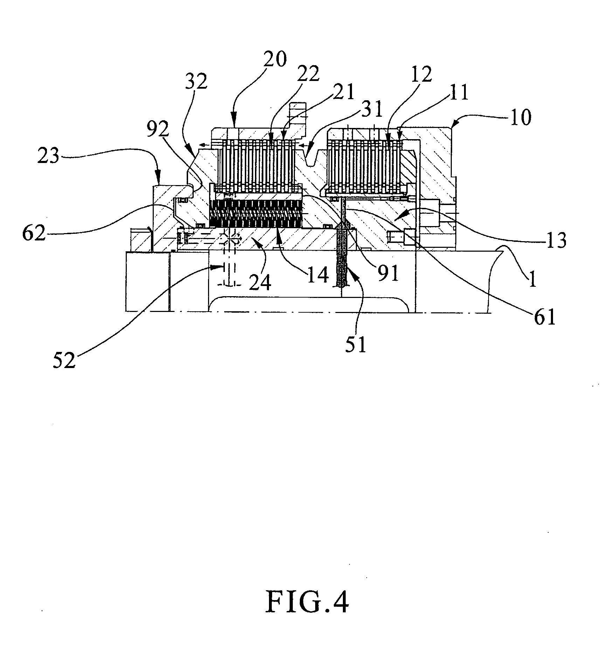

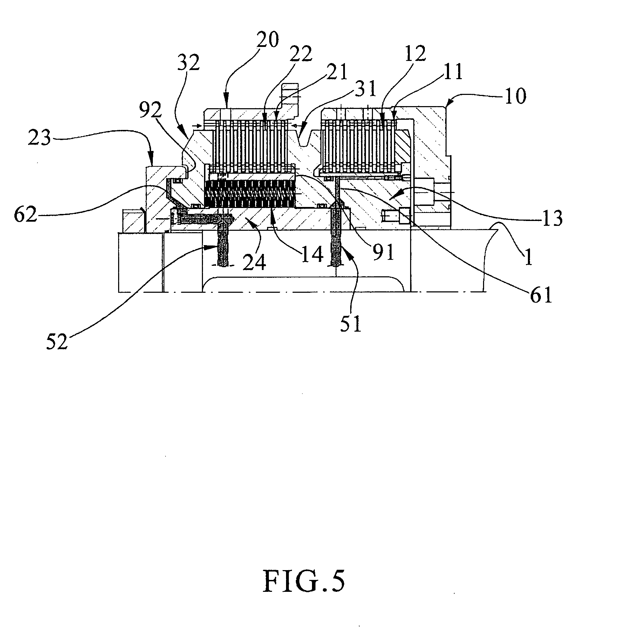

Figs. 3, 4 and 5 show the respective brake, neutral and clutch positions. The hydraulic oil lines 51 and 52 have been shown empty in Fig. 3 and full in Fig. 5. In Fig. 4 the line 52 has been shown empty and the line 51 full.

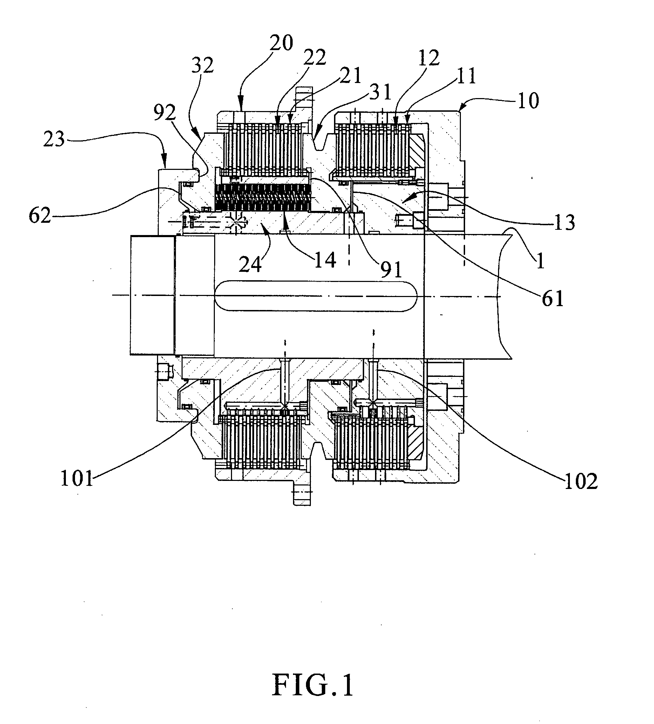

In the brake position illustrated in Fig. 1, with no pressure in either of the lines 51, 52 the springs 14 push the plunger 32 to the left until it comes to a stop 92 and the plunger 31 to the right so that the plates 11 and 12 are trapped causing to shaft 1 to come to a halt.

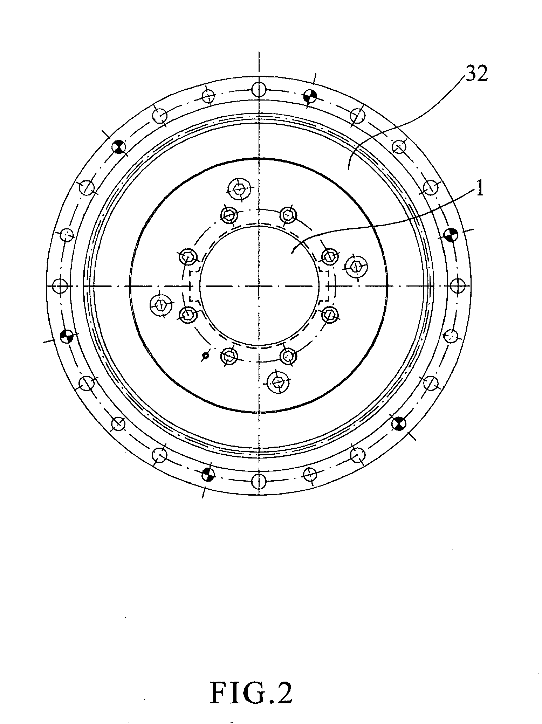

In the neutral position shown in Fig. 2, the plunger 31 is acted upon by introducing pressure in the line 51 so that the plunger moves to the left until it comes to a stop 91, thus releasing the plates on the brake side 11, 12. At the same time, the springs act on the plunger 32 moving it to the left as far as the stop 62, causing the plates on the clutch side to be released. The travel of the plunger 32 is greater than that of the plunger 31 ensuring that the clutch plates remain free axially. In this position the brake is released and the clutch is disengaged.

In the clutch position shown in Fig. 3, pressure is introduced in the line 52 as well as in the line 51. Thus, the intermediate plunger 31 moves to the left until it comes to a stop 91 (or is held in the same position if it starts from the neutral state shown in Fig. 2) whereas the lateral plunger 32 is moved to the right by the action of the fluid in the line 52. Both plungers must overcome the force applied by the springs 14. Since the area 61 is greater than the area 62, the intermediate plunger 32 remains against the stop 91 behaving like a rigid component, whereas it is the operative lateral plunger 32 which acts by squeezing the plates on the clutch side 21, 22 and engaging the clutch

Fig. 1 also shows the lines 101 and 102 of the cooling circuit.

Although the present invention has been explained in detail based on the above description and drawings, it will be understood that persons skilled in the art will be capable of introducing many variants which will fall within the scope of the present invention if they are covered by the widest meaning of the following claims and their equivalents.

Similarly, application of the invention is not limited to presses and may also be used in other types of machine.

## Claims

1. Combined brake and clutch device for presses of the type which has two sets of plates for the clutch and the brake respectively, **characterised in that** it comprises two sets of plungers which can be moved independently by the action of two independent sets of hydraulic fluid lines which are capable of acting respectively on the set of clutch plates and on the set of brake plates, the device having a set of fixed springs which urge both movable plunger components apart, enabling a third neutral position to be obtained, in addition to the clutch position and the brake position, in which the plates of the brake set and the plates of the clutch set are simultaneously released.

2. Combined brake and clutch device for presses according to claim 1, **characterised in that** the two plunger components are movable on a fixed body integral with the shaft, one of them being movable axially between a stop position on the fixed body and an actuation position of the clutch plates, whereas the other is movable between another stop on the fixed body and the brake plates.

3. Combined brake and clutch device for presses according to claim 1, **characterised in that** each of the plunger components is supplied by an independent fluid inlet, and these inlets act respectively on a surface which acts on the plunger actuating the brake and on another surface which acts on the plunger actuating the clutch, the actuation surface of the brake being greater than that of the clutch, enabling the first plunger to act as a rigid component, while the other plunger component acts by pressing the clutch plates and engaging the clutch.

4. Combined brake and clutch device for presses according to the preceding claims, **characterised in that** the travel of the plunger component for acting on the clutch plates is greater than that of the plunger component for acting on the brake plates.

5. Combined brake and clutch device for presses according to claim 1, **characterised in that** the combined brake and clutch device is sized and structured to allow the direct substitution of a conventional combined brake and clutch set, with no neutral position, connected to a press or other machine.
